# EUROPÄISCHE PATENTSCHRIFT

(11) **EP 0 875 750 B1**
(45) Veröffentlichungstag und Bekanntmachung des Hinweises auf die Patenterteilung: **05.03.2008**
(21) Anmeldenummer: 98107230.9
(22) Anmeldetag: 21.04.1998
(51) Int. Cl.: G01N 22/04

(54) **Anordnung zur Erkennung des Zustandes einer Fahrbahnoberfläche**
Device for ascertaining the state of a road
Dispositif pour déterminer l'état d'une chaussée

(30) Priorität: 02.05.1997 DE 19718632
(43) Veröffentlichungstag der Anmeldung: 04.11.1998
(73) Patentinhaber: Daimler AG, 70327 Stuttgart (DE)
(72) Erfinder: Finkele, Rolf, 89601 Schelklingen (DE); Schreck, Andreas, 89134 Blaustein (DE); Wanielik, Gerd, Dr., 89079 Ulm (DE)

(56) Entgegenhaltungen:
- EP-A- 0 470 506
- WO-A-85/02266
- PATENT ABSTRACTS OF JAPAN vol. 005, no. 021 (P-048), 7.Februar 1981 & JP 55 147375 A (SUMITOMO ELECTRIC IND LTD), 17.November 1980,

## Beschreibung

Die Erfindung betrifft eine Anordnung zur Erkennung des Zustandes einer Fahrbahnoberfläche.

Eine derartige Anordnung, die insbesondere zur Erkennung von vereisten Fahrbahnoberflächen von Wichtigkeit ist, ist beispielsweise aus der DE 40 40 842 A1 bekannt. Bei der bekannten Anordnung werden die unterschiedlichen Infrarotabsorptionseigenschaften verschiedener Fahrbahnzustände sowie deren Mikrowellen-Streueigenschaften verknüpft, um eine Unterscheidung zwischen den Oberflächenzuständen trocken, nass und vereist zu gewinnen.

Bei der in der WO 85/02266 A beschriebenen Anordnung zur Straßenzustandsbestimmung wird die Fahrbahnoberfläche mit einem Mikrowellensender bestrahlt und das von der Fahrbahn reflektierte Signal durch einen Empfänger detektiert. Das empfangene Signal wird sodann neben einer Intensitätsauswertung auch einer Vermessung des Polarisationszustandes unterzogen, um, ausgehend von dieser Information, auf den Straßenzustand zu schließen.

Aufgabe der vorliegenden Erfindung ist es, die Klassifikationseigenschaften einer solchen Anlage weiter zu verbessern.

Die Erfindung ist im Patentanspruch 1 beschrieben. Die Unteransprüche enthalten vorteilhafte Ausgestaltungen und Weiterbildungen der Erfindung.

Die Bestimmung und Auswertung der Depolarisationseigenschaften der Fahrbahnoberfläche durch polarisationsselektiven Betrieb im Sende- und/oder Empfangsfall unterstützt und ergänzt auf vorteilhafte Weise die Erkennung des Zustandes der Fahrbahnoberfläche mit den bekannten Anordnungen, die für das Mikrowellen-System lediglich eine Pegelauswertung mit Schwellwertvergleich vorsehen.

Die Depolarisationseigenschaften des ausgeleuchteten Fahrbahnbereichs lassen sich beispielsweise anschaulich in der an sich bekannten Poincaré-Kugel-Repräsentation darstellen, wo eine vereiste Fahrbahnoberfläche eine annähernd elliptische Ortskurve für Meßpunkte schon bei geringer Variation der Eisschichtdicke zeigt. Diese charakteristischen Depolarisationseigenschaften einer Fahrbahnvereisung lassen sich vorteilhafterweise zur Erkennung des Fahrbahnoberflächenzustandes auswerten, wobei die Poincare-Darstellung bei der automatischen Klassifikation nicht selbst mit einbezogen werden muß.

Dieses charakteristische Depolarisationsverhalten ist besonders ausgeprägt, wenn die Ausrichtung von Sender und Empfänger bezüglich der Fahrbahnoberfläche unter dem Brewster-Winkel von Eis für die Mikrowellenfrequenz erfolgt.

Die Anordnung von Sender und Empfänger kann dabei, insbesondere bei vorausschauender Fahrbahnzustandserkennung von einem Fahrzeug aus, monostatisch als auch vorzugsweise bistatisch sein.

Das Mikrowellensystem ist vorzugsweise vollpolarimetrisch ausgelegt, so daß die vollständige polarimetrische Streumatrix des ausgeleuchteten Fahrbahnbereichs bestimmt werden kann. Aus Gründen geringeren Platzbedarfs und/oder niedrigerer Kosten kann aber auch eine einfachere Ausführung mit nur teilpolarimetrischer Messung vorteilhaft sind.

Das polarimetrische Mikrowellensystem ermöglicht gleichzeitig vorteilhafterweise eine Bestimmung der Fahrbahnrauhigkeit. Durch Einsatz eines frequenzumschaltbaren oder frequenzabstimmbaren Mikrowellensystems, insbesondere mit Frequenzen oberhalb 35GHz können vorteilhafterweise freqeunzabhängige Depolarisationseffekte in der Auswertung ausgenutzt werden.

Das Mikrowellensystem wird für vorausschauende Straßenzustandserkennung vorzugsweise im vorderen Bereich, z.B. im Stoßstangenbereich eines Fahrzeugs montiert. Das zur Fahrbahnzustandserkennung eingesetzte Mikrowellensystem kann auch vorteilhafterweise für weitere Messungen, insbesondere als Geschwindigkeitssensor und/oder als Teil eines Radarsystems eingesetzt sein.

Die Auswertung der Straßenzustandserkennung kann in an sich bekannter Weise zu einer optischen/akustischen Signalisierung an den Fahrer und/oder auch einen automatischen Eingriff in den Betrieb des Fahrzeugs, beispielsweise in Form einer Geschwindigkeitsbegrenzung herangezogen werden.

Neben der Anordnung in einem Fahrzeug ist auch eine stationäre Anordnung zur Überwachung des Fahrbahnzustandes möglich, wobei als Fahrbahn auch das Rollfeld eines Flughafens verstanden werden kann. Auch im stationären Betrieb ist ein kombinierter Einsatz des Mikrowellensystem für weitere Meßzwecke neben der Fahrbahnzustandserkennung vorteilhaft.

## Patentansprüche

1. Anordnung zur Erkennung des Zustands einer Fahrbahnoberfläche mit einem Mikrowellen-Sende-Empfangs-System und einem Infrarot-Sende-Empfangs-System und mit Einrichtungen zur Verknüpfung der aus den beiden Systemen entnehmbaren Aussagen über Eigenschaften der Fahrbahnoberfläche,
**dadurch gekennzeichnet,**
**dass** das Mikrowellen-System im Sende- und/oder Empfangsfall polarisationsselektiv ist und Depolarisationseigenschaften des ausgeleuchteten Fahrbahnbereichs bestimmt,
wobei das Mikrowellen-System zirkular polarisierte Sendesignale emittiert.

2. Anordnung nach Anspruch 1, **dadurch gekennzeichnet, dass** das Mikrowellen-System die vollständige Streumatrix des ausgeleuchteten Fahrbahnabschnitts bestimmt.

3. Anordnung nach einem der Ansprüche 1 oder 2, **dadurch gekennzeichnet, dass** Sender und Empfänger des Mikrowellensystems bistatisch angeordnet sind.

4. Anordnung nach Anspruch 3, **dadurch gekennzeichnet, dass** die Ausrichtung der Sender- und Empfänger bezüglich der Fahrbahnoberfläche unter dem Brewster-Winkel von Eis für die Mikrowellenfrequenz erfolgt.

5. Anordnung nach einem der Ansprüche 1 oder 2, **dadurch gekennzeichnet, dass** Sender und Empfänger des Mikrowellensystems monostatisch angeordnet sind.

6. Anordnung nach einem der Ansprüche 1 bis 5, **dadurch gekennzeichnet, dass** für das Mikrowellen-System mehrere Sendefrequenzen einstellbar sind.

## Claims

1. Arrangement for identification of the state of a roadway surface by means of a microwave transmitting/receiving system and an infrared transmitting/receiving system, and by means of devices for linking the statements which can be obtained from the two systems relating to characteristics of the roadway surface,
**characterized**
**in that** the microwave system is polarization-selective during transmission and/or reception, and determines depolarization characteristics of the illuminated roadway area,
with the microwave system emitting circular-polarized transmission signals.

2. Arrangement according to Claim 1, **characterized in that** the microwave system determines the complete scatter matrix of the illuminated roadway section.

3. Arrangement according to one of Claims 1 or 2, **characterized in that** the transmitter and receiver of the microwave system are arranged bistatically.

4. Arrangement according to Claim 3, **characterized in that** the transmitter and receiver are aligned with respect to the roadway surface at the Brewster angle of ice for the microwave frequency.

5. Arrangement according to one of Claims 1 or 2, **characterized in that** the transmitter and receiver of the microwave system are arranged monostatically.

6. Arrangement according to one of Claims 1 to 5, **characterized in that** a plurality of transmission frequencies can be set for the microwave system.

## Revendications

1. Arrangement pour détecter l'état de la surface d'une chaussée comprenant un système émetteur/récepteur d'hyperfréquences et un système émetteur/récepteur d'infrarouges et comprenant des dispositifs pour combiner les messages relatifs aux propriétés de la surface de la chaussée pouvant être prélevés des deux systèmes, **caractérisé en ce que** le système à hyperfréquences lors de l'émission et/ou de la réception est à sélection de polarisation et détermine les propriétés de dépolarisation de la zone éclairée de la chaussée, le système à hyperfréquences émettant des signaux émis à polarisation circulaire.

2. Arrangement selon la revendication 1,
**caractérisé en ce que** le système à hyperfréquences détermine la matrice de dispersion complète de la section éclairée de la chaussée.

3. Arrangement selon l'une des revendications 1 ou 2, **caractérisé en ce que** l'émetteur et le récepteur du système à hyperfréquences sont disposés de manière bistatique.

4. Arrangement selon la revendication 3,
**caractérisé en ce que** l'orientation de l'émetteur et du récepteur par rapport à la surface de la chaussée est effectuée sous l'angle de Brewster de la glace pour les hyperfréquences.

5. Arrangement selon l'une des revendications 1 ou 2, **caractérisé en ce que** l'émetteur et le récepteur du système à hyperfréquences sont disposés de manière monostatique.

6. Arrangement selon l'une des revendications 1 à 5, **caractérisé en ce que** plusieurs fréquences d'émission peuvent être réglées pour le système à hyperfréquences.
